# EUROPÄISCHE PATENTANMELDUNG

(11) **EP 2 620 061 A1**
(43) Veröffentlichungstag der Anmeldung: **31.07.2013**
(21) Anmeldenummer: 12008300.1
(22) Anmeldetag: 12.12.2012
(51) Int. Cl.: A23L 1/304, A23L 1/29, A23L 2/52

(54) **Verfahren zur Herstellung eines Nahrungsmittels und hiermit hergestelltes Nahrungsmittel**

(30) Priorität: 25.01.2012 DE 102012001272; 03.05.2012 DE 102012008655
(71) Anmelder: HIPP & CO, 6072 Sachseln (CH)
(72) Erfinder: Kaltofen-Sinzig, Brigitte, 85276 Pfaffenhofen (DE)
(74) Vertreter: Sattler de Sousa e Brito, Clara

(57) **Zusammenfassung**

Die Erfindung betrifft ein Verfahren zur Herstellung eines Nahrungsmittels, insbesondere Babykost, wobei mineralstoffhaltiges Wasser zugesetzt wird. Ebenfalls umfasst ist ein mit einem erfindungsgemäßen Verfahren hergestelltes Nahrungsmittel, insbesondere Babykost.

## Beschreibung

Die Erfindung betrifft ein Verfahren zur Herstellung eines Nahrungsmittels insbesondere Babykost und ein mit diesem Verfahren hergestelltes Nahrungsmittel.

Nahrungsmittel mit einer bestimmten Mineralstoffkonzentration sind aus dem Stand der Technik zahlreich bekannt. Dies gilt insbesondere für den Bereich der Babykost, da hier eine ausgewogene Nährstoffkonzentration besonders wichtig ist.

Gemäß Nährwertberechnung liegt beispielsweise der Eisengehalt bei Babykost bei Menüs nach dem vierten Monat durchschnittlich bei 0,6 mg pro Portion. Vereinzelte Analysen ergeben auch sehr viel niedrigere Werte von ca. 0,3 mg pro 100 g. Die Berechnung für einen Milch-Getreidebrei im Glas ergibt 0,2 bis 0,35 mg Eisen pro 100 g. Ein Frucht-Getreide-Brei im Glas liefert beispielsweise ca. 0,4 mg Eisen pro 100 g. Die Berechnung der Beispiele erfolgte mit dem Nährwertberechnungsprogramm PRODI.

Bei Beikost wird häufig kein Eisen hinzugefügt, da es für Eisen keine gesetzlich vorgeschriebene Mindestmenge in Beikost gibt. Bei Biobeikost ist ein Eisenzusatz sogar in Form eines Zusatzstoffes nicht zulässig, da es gemäß der EU-Öko-Verordnung untersagt ist, Nährstoffe zuzusetzen, wenn dies nicht durch ein spezielleres Gesetz vorgeschrieben ist. Lediglich bei Instantmilchbreien ist eine Eisenanreicherung indirekt durch die Zutat Folgemilch gegeben, da für Folgemilch durch ein spezielleres Gesetz bestimmte Eisenwerte vorgeschrieben sind. Das Eisen kann in Form von isolierten Eisenverbindungen wie Eisenlactat zugesetzt werden. Abgesehen von diesem Sonderfall müssen bei Bioprodukten alle Nährstoffe aus den Lebensmitteln und nicht aus isolierten Nährstoffzusätzen stammen.

Gemäß Nährwertberechnung liegt beispielsweise der Jodgehalt eines Menüs nach dem vierten Monat durchschnittlich bei ca. 5 µg pro 100 g. Einzelne Analysen zeigen Werte von unter 1 µg pro 100 g. Eine Berechnung erfolgte auch hier mit dem Nährwertberechnungsprogramm PRODI.

Auch Jod wird in der Regel bei Beikost nicht zugesetzt. Lediglich bei fleischhaltigen Komplettmalzeiten ab dem achten Monat und im späteren Fütteralter wird Jodsalz eingesetzt. Beinhaltet Beikost Folgemilch zum Beispiel bei Milch-Getreide-Breien kann über die Folgemilch eine Nährstoffverbindung wie Kaliumjodat zugesetzt werden.

Die Aufgabe der vorliegenden Erfindung ist es, ein verbessertes Verfahren zur Herstellung eines Nahrungsmittels, insbesondere Babykost, zur Verfügung zu stellen.

Diese Aufgabe wird durch ein Verfahren zur Herstellung eines Nahrungsmittels insbesondere Babykost gelöst, wobei mineralstoffhaltiges Wasser mit mindestens einer Konzentration von mehr als 0,11 mg Eisen pro Liter und/oder mehr als 1,3 µg Jod pro Liter und/oder mehr als 7 mg Calcium pro Liter und/oder mehr als 1 mg Magnesium pro Liter und/oder mehr als 0,7 mg Zink pro Liter zugesetzt wird. Der Mineralstoffgehalt wird hierbei als fester Rückstand berechnet.

Begrifflich sei folgendes erläutert: unter "Mineralstoff" zu verstehen sind Mengenelemente wie Calcium, Chlor, Kalium, Magnesium, Phosphor, und Natrium ebenso essentielle Spurenelemente wie Chrom, Kobalt, Eisen, Fluor, Jod, Kupfer, Mangan, Molybdän, Selen, Silizium, und Zink. Neben den mit Mengenangaben genannten Mineralstoffen Eisen, Jod, Calcium, Magnesium und Zink können sämtliche unter die Mineralstoffdefinition fallende Mengenelemente in unterschiedlichen Konzentrationen im mineralstoffhaltigen Wasser enthalten sein.

Hierbei können einzelne Mineralstoffe im Rahmen der unten angegebenen Grenzen sehr hohe Werte aufweisen, während andere sehr niedrige Werte aufweisen oder gar nicht vorhanden sind. Auch können sämtliche Mineralstoffe mittlere Werte aufweisen. Auch Höchstwerte sind denkbar. Es können auch einzelne oder einige wenige der Mineralstoffe im mineralstoffhaltigen Wasser vorhanden sein.

Enthält das Wasser mehrere Mineralstoffe in nennenswerter Menge, so kann eine Anreicherung des Nahrungsmittels mit all diesen Mineralstoffen erfolgen.

Von Vorteil ist, wenn in einem vorgelagerten Schritt der Mineralstoffgehalt des mineralstoffhaltigen Wassers durch Entzug von reinem Wasser (H₂O) erhöht wird. Dies hat den Vorteil, dass in einem Produkt, in dem nur eine begrenzte Menge an Wasser enthalten sein kann- zum Kochen oder zum Erzielen einer gewünschten Konsistenz - der Mineralstoffgehalt erhöht werden kann.

Das Erhöhen des Mineralstoffgehalts kann durch Verdampfen oder Membranfilterverfahren erfolgen. Insbesondere kann ein Rotationsverdampfer, beispielsweise ein sogenannter Rotavapor eingesetzt werden. Bei einem Rotationsverdampfer ist durch die Kombination von Rotation und Vakuum eine besonders schonende Wassereinengung möglich und für das Aufrechterhalten der Lösung von zweiwertigem Eisen im Wasser von Vorteil.

Vorteilhafterweise ist ein Mineralstoff Eisen. So kann eine bestimmte Konzentration von Eisen im Nahrungsmittel erzielt werden. Von Vorteil kann sein, wenn das mineralstoffhaltige Wasser eine Eisenkonzentration von mehr als 0,11 mg Eisen pro Liter vorzugsweise von mehr als 4,5 mg Eisen pro Liter, besonders vorzugsweise von mehr als 30 mg Eisen pro Liter, insbesondere von ungefähr 32 mg Eisen pro Liter aufweist. Auch höhere Werte bis zu 1000 mg pro Liter sind möglich. Abhängig von der Einsatzmenge des Wassers in einer Rezeptur bei Zubereitung des Nahrungsmittels kann so eine bestimmte Eisenkonzentration im Nahrungsmittel erzeugt werden. Besonders vorteilhaft kann hier ein Eisengehalt von 32 mg Eisen pro Liter Wasser sein, da hier bei einer üblichen Einsatzmenge des Wassers in einer Rezeptur eine Menge von ungefähr 15 % der empfohlenen Tageszufuhr an Eisen (1,2 mg Eisen) für Säuglinge und Kleinkinder durch die Zugabe des mineralstoffhaltigen Wassers generiert werden kann.

Weiter von Vorteil ist, wenn ein Mineralstoff Jod ist. So kann ebenfalls eine gewünschte Jodkonzentration im hergestellten Nahrungsmittel erzeugt werden. Jod ist ein kritischer Nährstoff im Säuglings- und Kleinkindalter. Es wird speziell empfohlen industrielle Beikost mit Jod anzureichern. Kochen Eltern Beikost selbst und stillen weiterhin, so wird neuerdings empfohlen, dem Kind Jod in Form von Tabletten zu reichen.

Besonders vorteilhaft ist, wenn das mineralstoffhaltige Wasser eine Jodkonzentration von mehr als 1,3 µg Jod pro Liter, vorzugsweise von mehr als 150 µg pro Liter, besonders vorzugsweise von mehr als 300 µg Jod pro Liter, insbesondere von 316 µg Jod pro Liter aufweist. Auch höhere Werte von 4800 µg pro Liter sind möglich.

Somit kann im Endnahrungsmittel bei üblicher Einsatzmenge des Wassers in den Rezepturen eine Menge von 15 % der empfohlenen Tageszufuhr an Jod (12 µg Jod für Säuglinge und 15 µg Jod für Kleinkinder) durch das mineralstoffhaltige Wasser generiert werden.

Weiter von Vorteil ist, wenn ein Mineralstoff Calcium ist. So kann eine gewünschte Calciumkonzentration im hergestellten Nahrungsmittel erreicht werden.

Besonders vorteilhaft ist, wenn das mineralstoffhaltige Wasser eine Calciumkonzentration von mehr als 7 mg Calcium pro Liter, vorzugsweise von mehr als 350 mg Calcium pro Liter, besonders vorzugsweise von mehr als 500 mg Calcium pro Liter, insbesondere von 1580 mg pro Liter aufweist. Auch Werte von bis zu 2750 mg Calcium pro Liter sind möglich.

Vorteilhaft ist auch, wenn ein Mineralstoff Magnesium ist, da dann eine gewünschte Magnesiumkonzentration im hergestellten Nahrungsmittel eingestellt werden kann.

Besonders vorteilhaft ist es, wenn das mineralstoffhaltige Wasser eine Magnesiumkonzentration von mehr als 1 mg Magnesium pro Liter, vorzugsweise von mehr als 100 mg Magnesium pro Liter, besonders vorzugsweise von mehr 200 mg Magnesium pro Liter, insbesondere von 237 mg Magnesium pro Liter aufweist. Auch höhere Werte von beispielsweise 1320 mg Magnesium pro Liter sind möglich.

Schließlich ist es zudem von Vorteil, wenn ein Mineralstoff Zink ist. Dies ermöglicht eine gewünschte Zinkkonzentration im hergestellten Nahrungsmittel zu erzeugen.

Besonders vorteilhaft ist es, wenn das mineralstoffhaltige Wasser eine Zinkkonzentration von mehr als 0,07 mg Zink pro Liter, vorzugsweise von mehr als 1 mg Zink pro Liter, besonders vorzugsweise von mehr als 10 mg Zink pro Liter, insbesondere von 16 mg Zink pro Liter aufweist. Auch höhere Werte von 370 mg Zink pro Liter sind möglich.

Das mineralstoffhaltige Wasser kann Meerwasser sein. Meerwasser ist insbesondere eine gute Jodquelle.

Ein weiterer Aspekt der Erfindung betrifft ein mit dem erfindungsgemäßen Verfahren hergestelltes Nahrungsmittel, insbesondere Babykost. Dieses Nahrungsmittel kann dann die entsprechenden Mineralstoffe in der gewünschten Konzentration aufweisen.

Das Nahrungsmittel kann eine Konserve insbesondere eine Vollkonserve sein. Auch andere Produktformen wie beispielsweise ein Instantprodukt, bei dem das Wasser mitgetrocknet wird, halbfertige Produkte oder Tiefkühlprodukte sind möglich.

Vorteilhaft kann es sein, wenn das Nahrungsmittel eine Eisenkonzentration von mehr als 0,9 mg pro Portion, bzw. von ungefähr 1,2 mg pro Portion, aufweist. Dies entspricht einer Menge von 15 % des Referenzwertes der Diätverordnung Anlage 21 bzw. von 15 % der täglich empfohlenen Zufuhrmenge gemäß D-A-CH-Referenzwerten für die Nährstoffzufuhr für Säuglinge und Kleinkinder.

Von Vorteil ist weiter, wenn das Nahrungsmittel eine Jodkonzentration von mehr als 10,5 µg pro Portion, bzw. von ungefähr 12 µg pro Portion für Säuglinge und 15 µg pro Portion für Kleinkinder aufweist. Dies entspricht einer Menge von 15 % des Referenzwertes der Diätverordnung Anlage 21 bzw. einer Menge von 15 % der täglich empfohlenen Zufuhrmenge gemäß D-A-CH-Referenzwerten für die Nährstoffzufuhr für Säuglinge und Kleinkinder.

Alternativ oder kumulativ kann das Nahrungsmittel eine Calciumkonzentration von mehr als 60 mg pro Portion für Säuglinge und von mehr als 90mg/Portion für Kleinkinder aufweisen. Dies entspricht einer Menge von 15 % des Referenzwertes der Diätverordnung Anlage 21 bzw. einer Menge von 15 % der täglich empfohlenen Zufuhrmenge gemäß D-A-CH-Referenzwerten für die Nährstoffzufuhr für Säuglinge und Kleinkinder.

Vorteilhafterweise weist das Nahrungsmittel eine Magnesiumkonzentration von mehr als 9 mg pro Portion für Säuglinge und von mehr als 12 mg pro Portion für Kleinkinder auf. Dies entspricht einer Menge von 15 % des Referenzwertes der Diätverordnung Anlage 21 bzw. einer Menge von 15 % der täglich empfohlenen Zufuhrmenge gemäß D-A-CH-Referenzwerten für die Nährstoffzufuhr für Säuglinge und Kleinkinder.

Schließlich kann das Nahrungsmittel eine Zinkkonzentration von mehr als 0,3 mg pro Portion für Säuglinge und von mindestens 0,45 mg pro Portion für Kleinkinder, bevorzugt von ungefähr 0,6 mg pro Portion aufweisen. Dies entspricht einer Menge von 15 % des Referenzwertes der Diätverordnung Anlage 21 bzw. einer Menge von 15 % der täglich empfohlenen Zufuhrmenge gemäß D-A-CH-Referenzwerten für die Nährstoffzufuhr für Säuglinge und Kleinkinder.

Naturgemäß stellen im Nahrungsmittel auch die übrigen eingesetzten Lebensmittel Quellen für Mineralstoffe wie Eisen, Jod, Calcium, Magnesium und Zink dar. Der Gesamtmineralstoffgehalt im Nahrungsmittel ergibt sich somit aus der Summe der Gehalte aller Zutaten.

Die Erfindung wird nachfolgend anhand eines Rezepturbeispiels näher erläutert.

Für Gemüsereis mit Biohühnchen zur Ernährung nach dem 4. Monat werden 43 % Gemüse, zum Beispiel Karotten, Erbsen und Tomaten, Wasser, 22 % gekochter Reis, 8 % Hühnerfleisch, 1,7 % Rapsöl und Zwiebeln verarbeitet. Der nach SKF berechnete Eisengehalt beträgt 0,24 mg pro 100 g. Einzelanalysen ergeben Werte von 0,38 bis 0,47 mg pro 100 g. Nach SFK berechnet sich der Jodgehalt zu 1,8 µg pro 100 g. Einzelanalysen ergeben hier Werte von weniger als 1 µg pro 100 g.

Das beigefügte mineralstoffhaltige Wasser enthält 32 mg Eisen pro Liter und 316 µg Jod pro Liter. Das üblicherweise verwendete Trinkwasser wird anteilig durch eisen- und jodreiches mineralstoffhaltiges Wasser ersetzt, so dass die Rezeptur 20 % des eisen- und jodreichen Wassers enthält. Hierdurch wird eine Menge von 0,64 mg Eisen und 6,3 µg Jod pro 100 g dem Produkt hinzugefügt. Im gesamten Menü ergibt sich somit ein Gehalt von 1,0 bis 1,1 mg Eisen pro 100 g und von 1,9 bis 2,1 mg Eisen pro verzehrfertiger 190 g-Portion. Der genannte gewünschte Mindestgehalt an Eisen wird somit erreicht bzw. überschritten.

Im gesamten Menü ergibt sich somit ein Gehalt von 3,6 bis 8 µg Jod pro 100 g und 12 bis 15 µg Jod pro verzehrfertiger 190 g-Portion. Der genannte gewünschte Mindestgehalt an Jod wird somit erreicht bzw. überschritten.

Das Wasser wird im Produktionsprozess zugegeben und wie eine Zutat in den Rezepturen behandelt. Es wird über Rohrleitungen mit einem Volumenmesser dosiert. Dies kann zu verschiedenen Zeitpunkten und an verschiedenen Stellen der Herstellung eines Produkts erfolgen.

## Patentansprüche

1. Verfahren zur Herstellung eines Nahrungsmittels insbesondere Babykost, ***dadurch gekennzeichnet, dass*** mineralstoffhaltiges Wasser mit einer Konzentration von mindestens 0,11 mg Eisen und/oder mindestens 1,3 µg Jod und/oder mindestens 7 mg Calcium und/oder mindestens 1 mg Magnesium und/oder mindestens 0,7 mg Zink pro Liter zugesetzt wird.

2. Verfahren nach Anspruch 1, ***dadurch gekennzeichnet, dass*** in einem vorgelagerten Schritt der Mineralstoffgehalt des mineralstoffhaltigen Wassers durch Entzug von reinem Wasser erhöht wird.

3. Verfahren nach Anspruch 2, ***dadurch gekennzeichnet, dass*** der Mineralstoffgehalt durch Verdampfen erhöht wird.

4. Verfahren nach Anspruch 3, ***dadurch gekennzeichnet, dass*** zum Verdampfen ein Rotationsverdampfer angewendet wird.

5. Verfahren nach einem der Ansprüche 2 bis 4, ***dadurch gekennzeichnet, dass*** der Mineralstoffgehalt durch ein Membranfilterverfahren erhöht wird.

6. Verfahren nach einem der vorgehenden Ansprüche, ***dadurch gekennzeichnet, dass*** das mineralstoffhaltige Wasser eine Eisenkonzentration von mehr als 0,11 mg Eisen pro Liter, vorzugsweise von mehr als 4,5 mg Eisen pro Liter, besonders vorzugsweise von mehr als 30 mg Eisen pro Liter, und insbesondere von ungefähr 32 mg Eisen pro Liter aufweist.

7. Verfahren nach einem der vorhergehenden Ansprüche, ***dadurch gekennzeichnet, dass*** das mineralstoffhaltige Wasser eine Jodkonzentration von mehr als 1,3 µg Jod pro Liter, vorzugsweise von mehr als 150 µg Jod pro Liter, besonders vorzugsweise von mehr als 300 µg Jod pro Liter, und insbesondere von 316 µg Jod pro Liter aufweist.

8. Verfahren nach einem der vorhergehenden Ansprüche, ***dadurch gekennzeichnet, dass*** das mineralstoffhaltige Wasser eine Calciumkonzentration von mehr als 7 mg Calcium pro Liter, vorzugsweise von mehr als 350 mg Calcium pro Liter, besonders vorzugsweise von mehr als 500 mg Calcium pro Liter, und insbesondere von 1580 mg Calcium pro Liter aufweist.

9. Verfahren nach einem der vorhergehenden Ansprüche, ***dadurch gekennzeichnet, dass*** das mineralstoffhaltige Wasser eine Magnesiumkonzentration von mehr als 1 mg Magnesium pro Liter, vorzugsweise von mehr als 100 mg Magnesium pro Liter, besonders vorzugsweise von mehr als 200 mg Magnesium pro Liter, und insbesondere von 237 mg Magnesium pro Liter aufweist.

10. Verfahren nach einem der vorhergehenden Ansprüche, ***dadurch gekennzeichnet, dass*** das mineralstoffhaltige Wasser eine Zinkkonzentration von mehr als 0,7 mg Zink pro Liter, vorzugsweise von mehr als 1 mg Zink pro Liter, besonders vorzugsweise von mehr als 10 mg Zink pro Liter, und insbesondere von 16 mg Zink pro Liter aufweist.

11. Verfahren nach einem der vorhergehenden Ansprüche, ***dadurch gekennzeichnet, dass*** das mineralstoffhaltige Wasser Meerwasser ist.

12. Mit einem Verfahren nach einem der Ansprüche 1 bis 11 hergestelltes Nahrungsmittel, insbesondere Babykost.

13. Nahrungsmittel nach Anspruch 12, ***dadurch gekennzeichnet, dass*** es eine Konserve oder ein Tiefkühlprodukt oder ein Pulver ist.

14. Nahrungsmittel nach einem der Ansprüche 12 oder 13, ***dadurch gekennzeichnet, dass*** das Nahrungsmittel eine Eisenkonzentration von mehr als 0,9 mg Eisen pro Portion, bevorzugt von ungefähr 1,2 mg Eisen pro Portion, aufweist.

15. Nahrungsmittel nach einem der Ansprüche 12 bis 14, ***dadurch gekennzeichnet, dass*** das Nahrungsmittel eine Jodkonzentration von mehr als 10,2 µg Jod pro Portion, bevorzug von ungefähr 12 µg Jod pro Portion, weiter bevorzugt von ungefähr 15 µg Jod pro Portion aufweist.

16. Nahrungsmittel nach einem der Ansprüche 12 bis 15, ***dadurch gekennzeichnet, dass*** das Nahrungsmittel eine Calciumkonzentration von mehr als 60 mg Calcium pro Portion, bevorzugt von ungefähr 90 mg Calcium pro Portion, aufweist.

17. Nahrungsmittel nach einem der Ansprüche 12 bis 16, ***dadurch gekennzeichnet, dass*** das Nahrungsmittel eine Magnesiumkonzentration von mehr als 9 mg Magnesium pro Portion, bevorzugt von ungefähr 12 mg Magnesium pro Portion, aufweist.

18. Nahrungsmittel nach einem der Ansprüche 12 bis 17, ***dadurch gekennzeichnet, dass*** das Nahrungsmittel eine Zinkkonzentration von mehr als 0,6mg Zink pro Portion, bevorzugt von ungefähr 0,8 mg Zink pro Portion, aufweist.
